# EUROPEAN PATENT APPLICATION

(11) **EP 0 572 827 A1**
(43) Date of publication of application: **08.12.1993**
(21) Application number: 93107695.4
(22) Date of filing: 11.05.1993
(51) Int. Cl.: H05B 3/14, F01N 3/20, F01N 3/02

(54) **Heated cellular substrates**

(30) Priority: 03.06.1992 US 893256; 03.06.1992 US 893249
(71) Applicant: Corning Incorporated, Corning New York 14831 (US)
(72) Inventor: Bagley, Rodney Delano, Corning, NY 14831 (US); Brown, Jacqueline Leslie, Corning, NY 14831 (US); Gaylord, Lee Francis, Corning, NY 14831 (US); Herczog, Andrew, Corning, NY 14831 (US)
(74) Representative: Marchant, James Ian

(57) **Abstract**

The invention relates to a method for controlling the conductance of heated structures used to initiate faster light-off in emission control systems such as used for automotive catalytic converters, diesel particulate filters and industrial stacks and other applications in which the exhaust gas stream temperature is too low to initiate fast light-off. The invention also relates to an exhaust gas apparatus useful for achieving early light-off of catalytic converters comprising a cellular substrate having a layer of conductive material formed thereon and means for activating the device by passing electric current or by exposing the device to an electromagnetic energy field.

## Description

### BACKGROUND OF THE INVENTION

This invention relates to a device and method for heating a cellular or honeycomb structure used for emission control in order to initiate faster light-off in applications such as automotive catalytic converters, diesel particulate filters, wood stove, industrial stacks and any application in which the exhaust gas stream temperature is too low to initiate fast light-off of the catalytic converter. The invention also relates to a device and method for reducing the catalytic light-off time of a cellular or honeycomb structure when such structure is used as a catalytic converter for internal combustion engines.

Pollutants from automotive exhaust systems continue to present a substantial environmental challenge. Catalytic converters have been successful in reducing automotive exhaust pollution. However, as pollution standards become more stringent, there is an increasing need for better and improved converters. When a catalytic substrate or structure is heated to a sufficiently high temperature, the pollutants are catalytically reacted to produce harmless gases.

The Federal Test Procedure (FTP) is an emission certification test used on light-duty vehicles. Cold-start under FTP standards is the starting of an engine after a period of 12 to 36 hours of non-operation in a temperature environment of 20-30 °C. For most cold-starts, there is a time span of one to two minutes between the time the emissions begin, that is, cold start, to the time the substrate heats up sufficiently for catalyst "light-off" to occur. It is estimated that about 50% of the pollutants escaping into the atmosphere from a vehicle equipped with a catalytic converter is generated in these first two minutes following cold start-up. Light-off time is the time it takes to achieve a 50 percent conversion efficiency. The temperature at which about 50% of the pollutants have been converted to harmless gases is the light-off temperature. For most emission control systems, the light-off temperature is generally in the range of about 250 to 350 °C. By reducing the light-off time, the amount of pollutants escaping into the atmosphere can be reduced.

Modifications have been made to catalytic converters to increase the rate of heating in order to obtain shorter light-off times. Numerous schemes have been proposed to provide faster light-off of catalytic converters and thereby reduce the amount of pollutants. Mainly, it has been suggested to heat the entire catalytic converter or to heat the inlet gas stream in order to bring the substrate to its light-off temperature faster. Such heating methods are inefficient and require considerable amounts of energy. According to one of these modifications, a heater is disposed in the exhaust gas passage ahead of the catalytic converter. The suggested system consists of two separate sections where one section is a metal substrate catalyst having no heating ability, and the second section is a catalyzed metal substrate with the ability to be heated electrically. The heater first heats up the exhaust gas which then heats up the catalytic substrate. The problem with this method is that a substantial amount of electric power is required to raise the metal substrate to a temperature high enough to heat all of the incoming exhaust gases. Also, the efficiency of this method is low because a significant amount of heat is lost between the heater and the converter. It is not known to preheat a cellular structure or honeycomb to provide an early light-off catalytic converter by forming a resistance heater directly onto the surface of the structure and providing means for activating the surface by passage of electrical current.

Accordingly, it is the object of the present invention to provide a cellular structure for quick light-off by forming a resistance heater on the surface of the structure. The present invention discloses a self-heated catalytic converter suitable for various applications including automotive emissions control, diesel fumes, wood stove, industrial stacks emission and any application in which the exhaust gas stream temperature at start-up is too low to initiate fast light-off.

### SUMMARY OF THE INVENTION

Briefly, the present invention provides a resistive heating device or heatable structure composed of a cellular substrate having inlet and outlet end faces, and a matrix of cell walls defining a plurality of cells or passageways extending longitudinally and mutually parallel therethrough between the inlet and outlet end faces, a layer of electrically conductive material formed on the cell walls on the inlet end portion of the substrate such that the layer of conductive material is an integral part of the substrate, and means for activating the device.

The invention also provides a method for controlling the amount of conductive material needed to form a heated structure by providing a substrate having inlet and outlet end portions, providing means for shielding a portion of the cells, and applying a layer of conductive material over the unshielded portion of the substrate.

In another aspect, the invention relates to a method for increasing the effective surface area on which conductive material can be applied by forming an intermediate layer of suitable material on the end surface of the substrate and applying a layer of conductive material over the intermediate layer.

In still another aspect, the present invention provides a method for reducing the surface roughness or porosity of a substrate by applying a smooth layer of suitable material to the substrate.

In one particularly useful aspect, the device is part of an exhaust gas apparatus for initiating fast light-off of an automotive catalytic converter, the apparatus being composed of an exhaust gas conduit having the device disposed therein, and a catalytic converter.

In another aspect of the invention, an electrically conducting lead or lead wire is directly contacted or connected to the resistance heater. In this aspect, means are provided for securing the lead to the resistance heater, and for connecting the lead to a power source.

In still another aspect, the device is activated by placing the cellular structure in an electromagnetic energy field.

In yet another aspect, the device is formed by applying a layer of electrically conductive material or resistance heater on a substantially electrically conductive substrate having a non-conductive passivating layer formed thereon, such that the electrical resistance of the heater is different from that of the substrate.

In a further aspect, the heater is formed on a substantially non-conductive cellular substrate such as a ceramic honeycomb structure.

As used in this specification, including the claims, cellular or honeycomb structure or body includes any monolithic structure having inlet and outlet end faces, and having a matrix of walls defining a plurality of open-ended cells or passageways extending longitudinally and mutually parallel therethrough between the inlet and outlet end faces of the body. Preferably, for early light-off applications, the honeycomb is of a flow-through design so that all cells are open at both end faces of the structure. The terms "inlet end portion" and "outlet end portions" as used throughout this specification (including the claims), refer to the regions of the cellular structure adjacent to, close to, or in the region of, the inlet end and outlet end faces respectively. "Activating the device" means heating or energizing the device by exposing the structure to an electromagnetic energy field such as a microwave energy source, or by the passage electric current through the electrically conductive layer. Also, the term "precordierite" means material that is a precursor for, and reacts to form, cordierite upon firing or sintering.

### BRIEF DESCRIPTION OF THE DRAWINGS

FIG. 1 is a comparative graph showing the benefit of preheating a reactor prior to contacting the reactor with waste gases.

FIG. 2 is a pictorial view of a heated cellular structure.

FIG. 3 is a comparative graph showing the relationship between conductance and coating thickness of a conductive layer.

FIG. 4 is a schematic diagram showing a pressure contact arrangement.

FIGS. 5a and 5b are pictorial diagrams showing use of thick film paste as a contact or termination for the leads.

FIGS. 6a through 6d are comparative graphs showing the thermal stability of various thick film paste compositions.

FIG. 7 is a top view of the inlet end face of the substrate showing the use of a susceptor for inductive heating of a heated structure.

FIGS. 8 and 9 are pictorial diagrams showing various arrangements of the leads and contacts to vary the current path.

FIG. 10 is a graph showing the relationship between conductance and coating thickness of the conductive layer.

FIG. 11 is a graph showing the variation of conductance along the cell walls as the distance from the coated surface increases.

FIG. 12 is a schematic diagram of a heated cellular substrate.

FIG. 13 is a schematic diagram showing the formation of an intermediate layer on a substrate prior to formation of a conductive layer.

FIG. 14 is a graph showing the effect of porosity on the conductance of a heated substrate.

FIGS. 15a and 15b are pictorial views showing layers of conductive material over ridges of cell walls.

FIG. 16 is a top view of the inlet end surface of the substrate showing the selective application of varying amounts of conductive material over different portions of the substrate surface.

### DETAILED DESCRIPTION OF THE INVENTION

The device is produced by forming an electrically conductive material (resistance heater) directly on a cellular substrate and providing means for activating the device. The invention contemplates various methods for activating the device such as by exposing the structure to a high energy electromagnetic energy field such as a microwave energy source, or by the passage of electric current.

In one particularly useful embodiment, the device is part of an exhaust gas apparatus for initiating fast light-off of an automotive catalytic converter. The apparatus is composed of an exhaust gas conduit having a catalytic converter and the device disposed therein. The device may be a separate piece of cellular structure positioned in the exhaust gas stream, in the upstream end of the converter, that is, ahead of the converter such that the exhaust gas contacts the device before it reaches the converter. Alternatively, the device may be catalyzed to eliminate the need for a separate catalytic converter. The advantage of this aspect of the invention is that the heater is separate and distinct from the reactor and therefore, it can be replaced as necessary, independent of the reactor. In this embodiment, the heater can be formed of the same or different material from the reactor to control thermal stress and/or light-off. In a further aspect of this embodiment, the heater can be catalyzed with the same or a different catalyst as the reactor to improve the conversion efficiency of the reactor.

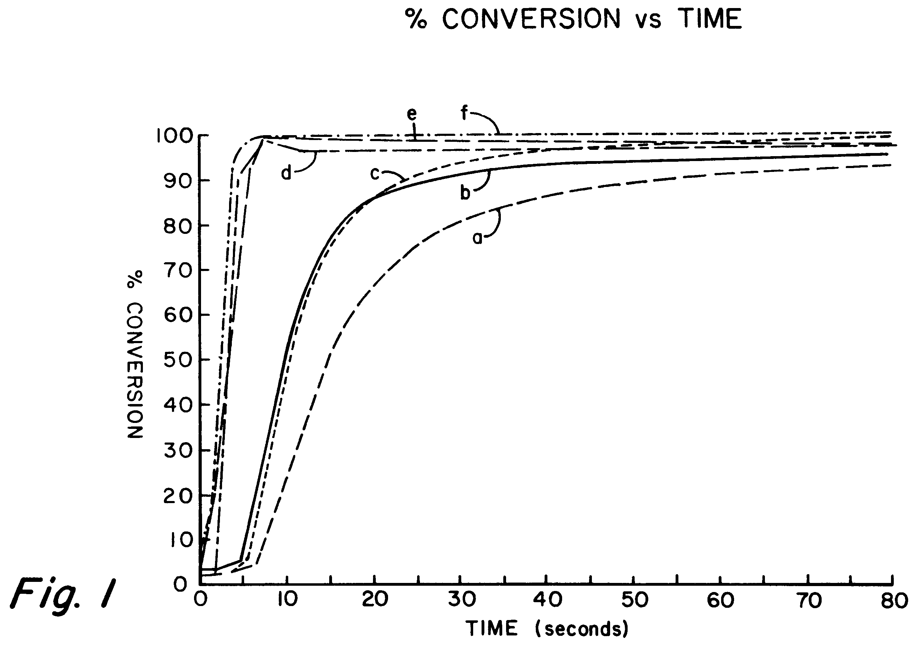

FIG. 1 and Experiment 4, describe the reduction in light-off time achieved by the device and method of the present invention. According to this aspect of the invention, the time required to attain light-off of the catalytic converter is reduced by heating the structure either before or after cold-start. As shown, quicker light-off is attained by preheating the reactor for a few seconds just prior to contacting the reactor with the waste or exhaust gas stream. The device can also be used without preheating. However, as shown, light-off is slower in the latter case because of the cooling effect of the waste gas stream on the reactor which tends to retard the heating process. In cases where the reactor is not pre-heated prior to contact with the exhaust gases, significantly more energy will be required to reduce the light-off time to that obtained by pre-heating the reactor. In one example using fritted platinum ink contacts and platinum leads, light-off temperatures (about 300 to 345 °C) were achieved in 2 to 3 seconds (without gas flow), using a low porosity (about 20%) cellular cordierite substrate having a thin layer (about 4 microns) of platinum/rhodium alloy applied by sputtering on the inlet end portion by applying about 5.6 volts.

The resistance heater is formed directly on the substrate preferably, on the inlet end portion of the substrate. This reduces the thermal mass to be heated and therefore minimizes the amount of energy required to attain light-off. For automotive catalytic converters, cell wall thicknesses typically vary from the range of about 0.11 to 0.15 mm for thin wall substrates to about 0.18 to 0.20 mm for the standard wall substrates. For other applications the cell wall thickness may be higher. The cells of catalytic converter substrates are generally open at both the inlet and outlet end faces of the substrates such that the open frontal area is preferably, greater than or equal to 50%. For very thin wall substrates, the open frontal area may be as high as about 80%. As a result, the available path for current flow in the thin cell wall substrates may be significantly less than that provided by standard wall or thicker wall substrates. Therefore, when the same thickness of resistance heater is formed on the substrates, the conductance of the thin wall substrate is significantly less than that of the standard wall substrate.

Limiting the resistance heater to the inlet end portion of the substrate also reduces the amount of conductive material needed to form the resistance heater. The total surface area occupied by the cell walls and the resistance heater is preferably less than 50%. As discussed elsewhere below, for very thin wall substrates, the total surface area occupied by the cell walls and the conductive material can be less than 30% of the open frontal area or plane of entry of the exhaust gas into the reactor. Since the resistance heater of the present device is applied only on a relatively small portion of the substrate, the temperature rise at a given power input level is very fast and the power requirement is significantly lower than that required to heat the entire substrate. Another advantage of the present invention is that by applying the conductive material to the inlet end portion of the reactor, the catalytic process is initially concentrated in the inlet end portion of the converter where the exhaust or waste gas first enters the reactor.

The device (FIG. 2) is produced by forming a layer of electrically conductive material 4 on a substrate, preferably, on a cellular substrate 2 having an inlet and an outlet end faces, 6 and 11 respectively, and having a matrix of walls 20 defining a plurality of cells or passageways 30 extending longitudinally and mutually parallel therethrough between the inlet and outlet end faces, such that all cells 30 are open at both end faces of the substrate 2. Preferably, the layer of conductive material is formed on the inlet end portion 10 of the substrate (i.e., the portion of the substrate around the inlet end face). To minimize the amount of energy required to attain light-off, the structure is heated a few seconds, preferably, less than 7 seconds, more preferably, less than 5 seconds just before the engine is started or before the structure is contacted with the cold exhaust gas stream. Once the engine is heated enough to sustain the light-off temperature, the power to the heater is reduced or shut off. Power to the heater can be controlled by various well known techniques. For example, the power can be programmed to turn on and off after a predetermined time period has elapsed following cold-start or after the temperature of the heater reaches a desired level. The shut-off time can be determined by use of a simple thermocouple or a timer for example. Power supply can also be controlled by monitoring the change in resistance of the heater.

The substrate can be either electrically conductive or non-conductive. Useful non-conductive substrates include substrates formed of cordierite and aluminum silicate (mullite) for example. For automotive applications, cordierite is preferred because of its low thermal expansion properties. For other applications where the heating is slower and where thermal stress is not as severe, other non-conductive materials can be used such as alumina and mullite. Metal substrates on which a non-electrically conducting, passivating layer has been formed are also useful for the practice of this invention.

Any electrically conductive material having suitable properties can be used to form the resistance heater. Preferably, the suitable material is chemically, thermally and electrically stable and is nonreactive with the substrate, catalyst and washcoat at the catalyst operating temperatures. The operating temperature will vary depending on the particular application. For example, for automobile applications, the heater must be stable at temperatures in the range of about 750 to 1000 °C, the catalytic operating temperature of most catalytic converters. Preferably, the resistance heater material is capable of being heated rapidly and uniformly. It is also desirable that the resistance be such as to permit the heater to be heated to light-off temperatures by a low voltage source (less than 27 volts) in a relatively short period of time. The current can be either DC or AC depending on the specific application. For automotive applications, the desired voltage requirement is in the range of about 9.5 to 27 volts, preferably in the range of about 9.5 to 13.5 volts. For other applications, the voltage requirement could vary depending on the waste gas composition and the desired light-off temperature. For better thermal control, we prefer any material having positive temperature coefficient of resistance.

Useful metals for the resistance heater of the invention include metals including gold, platinum, rhodium, ruthenium, iron, chrome and alloys of these metals, for example, Nichrome. Refractory compounds such as certain oxides and carbides are also useful for the invention. We prefer platinum and platinum alloys because the platinum can be recovered along with the platinum catalyst in most catalytic converters. It is chemically and thermally stable, has a positive temperature coefficient and can be soldered, welded and brazed to connect leads. Platinum is also catalytically active and is a substantially stable thin film conductor. However, pure platinum and 95 platinum/5 gold alloy films tend to degrade by an agglomeration process when subjected to isothermal aging particularly at 800 and 900 °C, causing large increases in resistivity. In a preferred embodiment, the resistance heater is formed of a platinum/rhodium alloy. Rhodium is known to stabilize platinum at high temperatures. When subjected to isothermal aging tests at temperatures of 700 to 900 °C for periods of up to 121.5 hours, we found that the platinum/rhodium alloy film did not develop porosity or discontinuities and generally tended to be more stable than the other materials tested.

The resistance heater can be deposited onto the substrate by various known methods such as sputtering, plasma spraying, evaporation, screen printing, electroplating and other thin and thick film deposition techniques. The heater can also be deposited as a metal powder paste provided the paste material has a sufficiently low viscosity and particle size to permit the paste to penetrate the cells to a desired depth. The paste is then fired or sintered to yield a durable coating or layer. In one embodiment, the heater is formed by first depositing electroless nickel onto the substrate surface, and then electroplating another metal, such as chromium, over the nickel surface. Other methods have been found useful for forming the resistance heater layer. In one experiment, we observed that a sputtered film of 95 Pt/5 Au alloy was more stable than a screen printed powdered film of about the same composition.

The conductive layer must be sufficiently resilient or tough to resist abrasion from exhaust particulates, and have sufficient thickness and conductivity to carry the electrical load and withstand the washcoat process. If the conductive layer is too thick, spalling and peeling may result due to thermal stress. On the other hand, if the conductive layer is too thin, discontinuities may occur leading to hot and cold spots when the structure is subjected to electrical load. We have found that when platinum or platinum alloys such as platinum/rhodium alloy are formed on a cordierite cellular substrate having wall thickness in the range of 125 to 175 microns, conductive layer thicknesses in the range of 0.05 to 8.0 microns, preferably, 0.5 to 5 microns are useful for this invention. Within this range of coating thickness, the net expansion of the combined metal coating and the cordierite substrate is essentially the same as the thermal expansion of the substrate.

The level of conductance of the resistance heater can be controlled by varying the thickness of the cell walls, the porosity or surface smoothness of the substrate, the size and shape of the substrate, the shape of the cells, cell density and orientation of the cells relative to the leads. Conductance can also be controlled by varying the method of deposition of the conductive material or by selecting materials with different resistivities.

The amount of metal needed to produce a given conductance or thickness of conductive material depends on the method of deposition as well as the porosity of the substrate. The higher the porosity, the more material will be required to produce a given conductance and the less uniform the coating. Non-uniform or uneven coatings of the conductive material lead to disruptions in the flow of electric current and variations in the resistance of the conductive layer. A uniform conductive layer is less likely to form cold or hot spots when the heater is subjected to an electrical load. Cold spots reduce the heat exchange efficiency of the heater, while hot spots tend to burn out the heater. The uniformity of the conductive layer is affected by the degree of roughness of the substrate. High or raised spots tend to have thicker coatings than the low or depressed spots which tend to have thinner coatings. Surface smoothness is particularly problematic in the case of porous structures such as certain cordierite honeycomb reactors. For porous substrates, it may be necessary to apply a sufficient thickness of the conductive material in order to fill the low spots and form a uniform layer of conductive material.

For automotive application, it is desirable to limit the voltage requirement to less than 27 volts (that is, the capacity of two standard car batteries), preferably 9.5 to 13.5 volts (the capacity of a single car battery). The voltage requirement can be varied by controlling the resistance of the heater. One way of controlling the resistance is by applying the conductive coating on substrates having standard or thick cell walls.

In one particularly useful embodiment, the resistance heater 4 of the invention is applied to the surface of an electrically non-conductive cellular structure such as a cordierite ceramic honeycomb substrate 2, to form the heated structure of this invention. Commercially available cordierite ceramic substrates have coefficients of thermal expansion of about 6 x 10-7 /°C to 1000 °C. Resistance heater materials used in the practice of the invention have thermal expansions of more than 10 times that of the cordierite ceramic substrates. For example, platinum, the preferred material of the invention has a coefficient of thermal expansion of about 85 x 10-7 /°C to 1000 °C. Because of the significant differential in thermal expansion properties, the conductive layer must be sufficiently thin to prevent cell plugging, peeling, cracking, spalling and thermal stress under thermal cycling particularly when the conductive layer is formed on high cell density substrates.

To improve the durability of the resistance heater, a protective layer can be formed over the conductive material, the leads and/or the contacts. Suitable materials for the protective layer include oxides such as cordierite, nitrides, glasses, glass-ceramics, and any durable material which is chemically and thermally compatible with the substrate and the conductive layer. The protective layer can be applied by various other methods such as by washcoat or sputtering.

In another useful embodiment, FIG. 2, activation or heating is accomplished by passing electric current to the structure 2 through electrical leads or lead wires 25 and 28. The leads 25 and 28 can be metal foils, ribbons, mesh, wire wool or wires which are contacted or attached to the heater surface on one end and adapted for connection to an electrical power source on the other end. The leads must have sufficiently low electrical resistance to prevent overheating under electrical load. Preferably, the leads have a lower electrical resistivity than the layer of conductive material. As with the conductive material, the leads must be electrically, mechanically and chemically stable in the exhaust stream and withstand thermal cycling. The lead material must also be compatible with the substrate and contact material at the catalyst operating temperature. Useful metals for the lead include copper, copper coated with platinum or gold, silver alloyed with palladium, platinum, annealed platinum and platinum alloys.

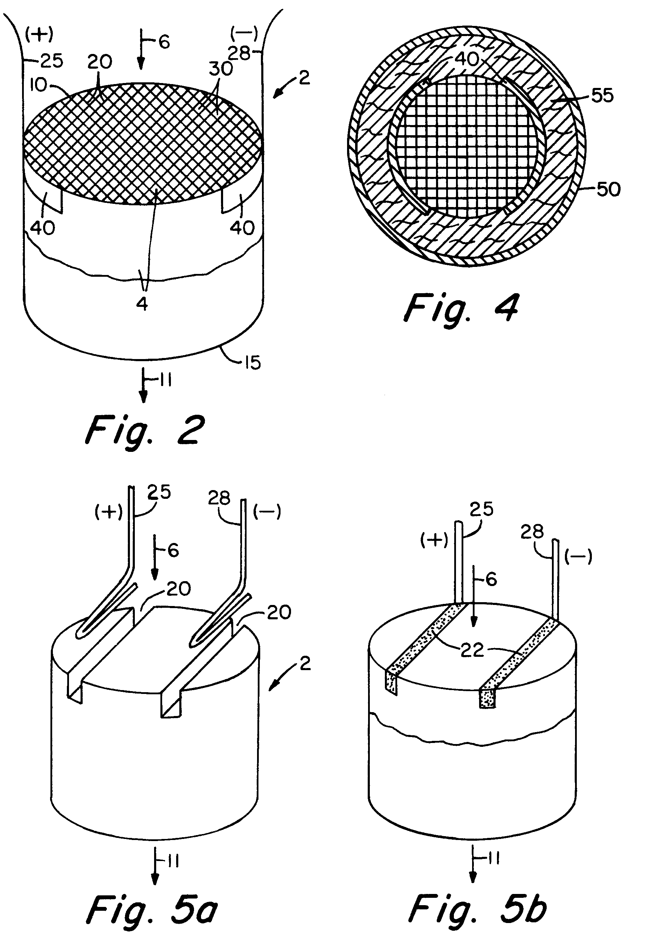

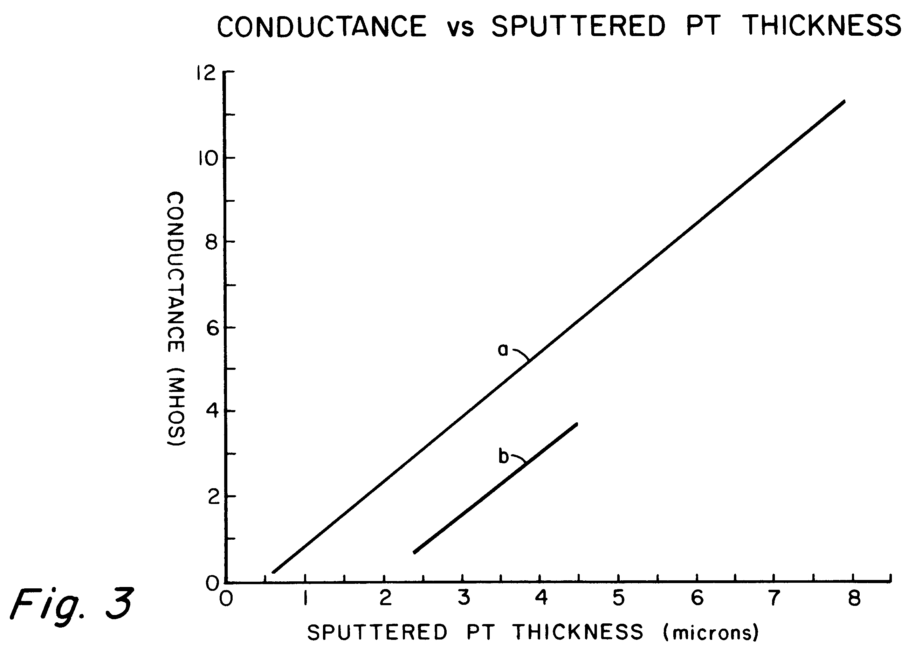

The leads are connected to the resistance heater by means of electrical contacts or terminations 40 which are chemically compatible with the heater, the leads and the substrate material under electrical load at the catalyst operating temperature. The leads can be contacted or connected to the heater at the contact or termination by known methods such as soldering, brazing, spot welding, fritted metal inks or by pressure pads. Like the heater and the leads, the contact must be electrically stable under thermal cycling and be capable of withstanding mechanical abrasion and chemical attack from the exhaust particulates and gases. In one embodiment FIG. 4, the leads are connected or contacted to the resistance heater 4 by means of pressure contacts 40. In this embodiment, the leads are held in position by the normal pressure exerted by the metal encasing 50 and resilient packing and/or insulating material 55 in which the structure is fixedly enclosed.

The contact can also be formed of a thick film ink or paste material made of low expansion glass or glass-ceramic or glass frit-based electronic ink. One particularly useful composition includes low expansion glass frit, metal flakes or powder, and an organic vehicle or binder. We have found that a thick film paste, when fired in the temperature range of 700 to 900 °C is useful for the practice of this invention, particularly when the substrate is formed of cordierite and both the conductive layer and the leads are formed of a platinum/rhodium alloy. In this embodiment, the composition of the contact or thick film paste is preferably 75-98.5 wt. % metal powder, more preferably, platinum powder, silver/palladium alloy powder or copper powder and 1.5 to 25 wt. % glass frit. To form the metal paste, 75 to 90 % of the metal powder is blended with 10 to 25 % of a screening medium or organic vehicle. In one embodiment, the leads are affixed to the heater by bonding the wires to the heater surface using the thick film paste. In another embodiment, FIGS. 5a and 5b, slots 20 are cut into the substrate 2 to accommodate the leads 25 and 28 which are then held in position by filling the slots 20 with the paste 22. In the preferred embodiment (FIG. 5b), a layer of conductive material 4 is formed over the paste 22 to form a continuous conductive surface over the substrate and contacts to provide a continuous current path between the leads and to improve the thermal stability of the thick film paste. When applied over the contacts, the conductive material also acts as a protective layer over the contacts and shields the contacts from both the chemical effect of exhaust gases and abrasion by the exhaust particulates. This is particularly important when the contact material contains silver or copper which are susceptible to sulfur which may be present in the exhaust gas stream. The slots 20 can be linear or non-linear depending on the particular lead termination.

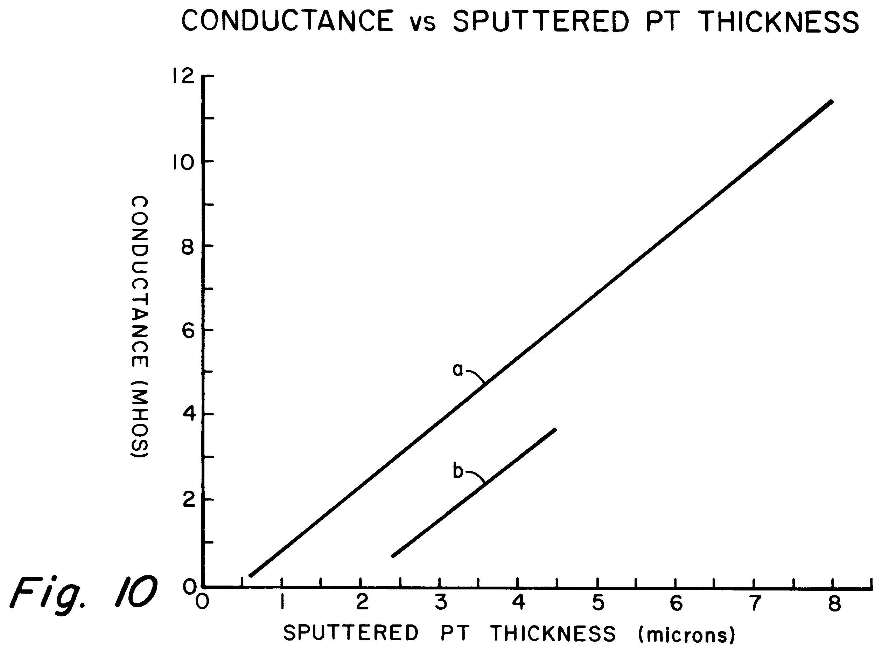

Since most of the heater is formed on the cell walls, preferably at, or near, the end portion of the substrate, for cellular bodies, the resistance is greatly affected by the thickness of the cell walls. As the cell wall thickness decreases, the resistance increases and conversely, the conductance decreases. FIG. 10 shows that for a cellular substrate of a given composition and similar porosity, the conductance of the metal coating is higher on a standard wall substrate (line a), than for a thin wall substrate, (line b). Therefore, significantly higher voltages would be required to heat thin walled substrates. The following table shows the percent of the end surface area of a 400 cells per square inch substrate occupied by cell walls of various thicknesses:

| Wall thickness (mm) | % end surface which is wall |
|---|---|
| 0.13 | 19.0 |
| 0.15 | 22.6 |
| 0.18 | 26.0 |
| 0.20 | 29.4 |

For ceramic automotive catalytic converters, cell wall thicknesses typically vary from the range of about 0.11 to 0.15 mm for thin wall substrates to about 0.18 to 0.20 mm for the standard wall substrates. For other applications the cell wall thickness may be higher. The cells of catalytic converter substrates are generally open at both the inlet and outlet end faces of the substrates such that the open frontal area is preferably, greater than 50%. For very thin wall substrates, the open frontal area may be as high as about 80%. As a result, the available path for current flow on the thin cell wall substrates may be significantly less than that provided by standard wall or thicker wall substrates. Therefore, when the same thickness of resistance heater is formed on the substrates, the conductance of the thin wall substrate is significantly less than that of the standard wall substrate.

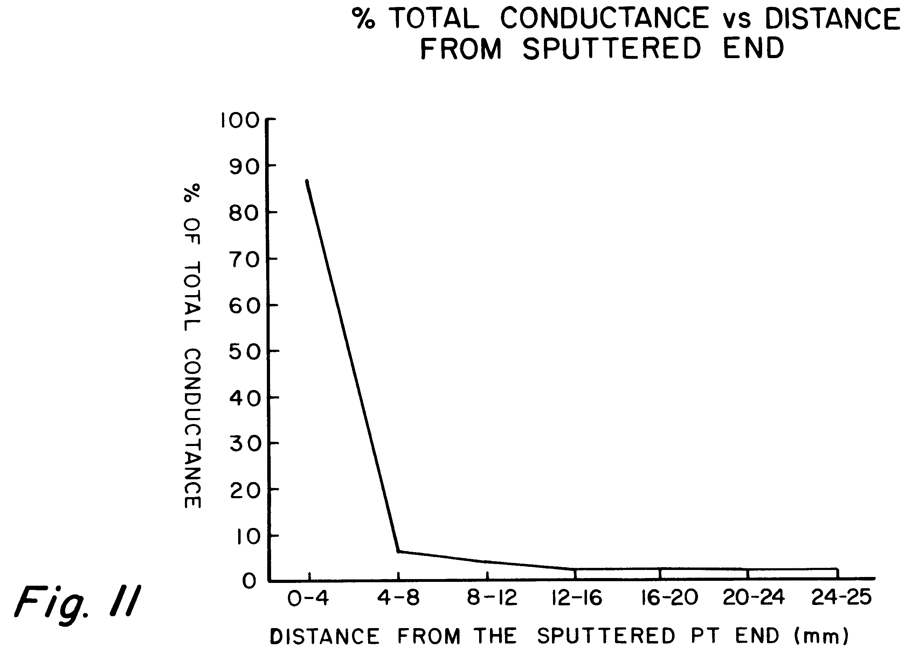

We have found that when a cellular substrate is sputtered with an electrically conductive material to form a heated structure, the material tends to penetrate down to several millimeters into the cell. By sectioning the coated substrate and mapping the conductance from the outermost surface down to the innermost deposits of electrically conductive coating in the cell walls, we have observed that substantially all of the conductance is limited to within a few millimeters of the end surface. This is depicted in FIG. 11 and described in Experiment 6 below, which show the measured conductance for a standard wall honeycomb structure having a layer of platinum sputtered on one end portion. As indicated, substantially all of the effective conductance is measured within a few millimeters from the sputtered end surface. By limiting the conductive material to the areas of the substrate where the most conductance is measured, the conductance of the heated substrate can be effectively controlled to improve the heat exchange efficiency of the heated substrate. In addition, the amount of conductive material needed to form the structure can be effectively minimized. This is accomplished for example, by providing means for shielding a portion of the cells and surfaces of the structure, and applying a layer of conductive material over the unshielded portion of the structure.

For example, a portion of the substrate can be shielded by (1) applying a layer of photoresist material on the substrate, and (2) applying a layer of masking material over a portion of the photoresist layer, preferably, on one end portion of the substrate to protect the masked end portion from light radiation. The substrate is then exposed to light radiation after which the photoresist material is dissolved from the masked end portion. A layer of conductive material is then applied on the end portion from which the photoresist material has been dissolved, and the exposed photoresist is subsequently burned off from the exposed portion of the substrate.

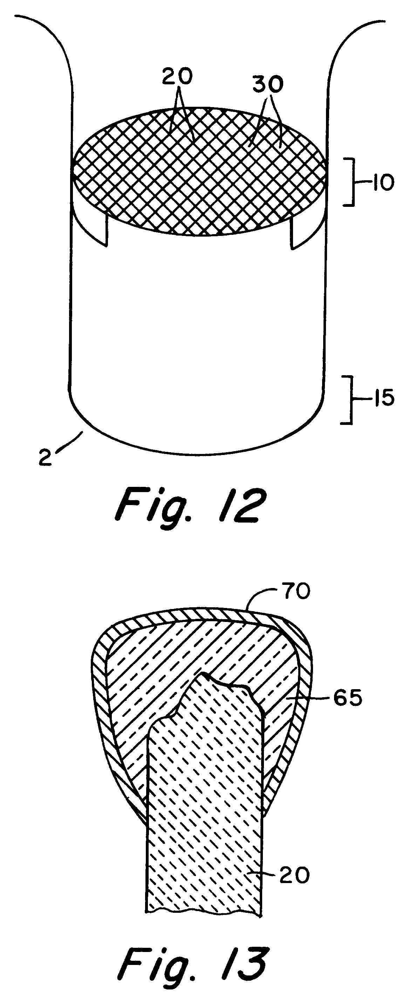

In one particularly useful embodiment, FIG. 12, a method is disclosed for controlling the conductance of a heated cellular substrate 2 having inlet and outlet end portions, 10 and 15 respectively, and having a matrix of cell walls 20 defining a plurality of cells or passageways 30 extending longitudinally and mutually parallel therethrough, between the inlet and outlet end faces. In a preferred embodiment, the conductive material is formed on a cellular or honeycomb structure having cells or passageways with wall thicknesses in the range of 0.03 to 0.25 mm, preferably, having an open frontal area greater than 50 %.

To control the depth of penetration and the amount of electrically conductive material, fritted metal powder which is sintered and having an appropriate viscosity to partially flow down the cells can be applied to the end portions of the cellular substrate and forced down the cells to the desired depth by various methods including rolling, dipping, spraying, and other known methods. Examples of suitable fritted metal powders of this type include fritted platinum powder. In addition, any base metal which is chemically inert to the substrate, washcoat and catalyst such as electroless nickel can be used to coat the substrate. The conductive coating can also be applied to the end portion of the cell walls down to a controlled depth by flame or plasma spraying. If the metal is deposited by sputtering, the depth of penetration can also be controlled by sputtering the conductive material at an oblique angle to the surface of the substrate. Other methods can also be used to control the depth of penetration into the cell walls and to minimize the amount of material deposited on the inlet end portion of the substrate. For example, when the conductive layer is deposited by sputtering, the penetration can be controlled by varying the sputtering voltage applied to the target, the partial pressure of the sputtering gas, the shape of the target and the type of material used for the target.

When the electrically conductive material is applied by sputtering, the penetration and amount of conductive material can be controlled by varying the distance between the target and the substrate, and/or by varying the motion of the substrate relative to the target to control the amount of material deposited within the cells. This is accomplished by varying the distance between the target and the substrate or by maintaining the substrate in a stationary position, or by keeping the substrate in motion as the metal is deposited. In the rotating mode, the sample is swept over the target at regular intervals. In the stationary mode, the sample is mounted and centered directly over the target.

In one embodiment, the penetration and amount of conductive material is controlled by plugging the cells to a predetermined depth and forming a layer of conductive material over the cell walls of the unplugged portion of the cells.

In another embodiment, the depth of penetration and amount of conductive material is controlled by dipping one end of the substrate into a masking material to form a protective layer over part of the cell walls, and forming a layer of conductive material over the unprotected cell walls.

Non-uniform or uneven coatings of the conductive material leads to discontinuities in the flow of electric current and variations in the resistance of the conductive layer. A uniform conductive layer is less likely to form cold or hot spots when the heater is subjected to an electrical load. Cold spots reduce the heat exchange efficiency of the heater, while hot spots tend to burn out the heater. The uniformity of the conductive layer is affected by the degree of roughness of the substrate as high or raised spots tend to have thicker coating than the low or depressed spots which tend to have thinner coatings. Surface smoothness is particularly problematic in the case of porous structures such as certain cordierite honeycomb reactors. For porous substrates, it is desirable to provide a smooth surface on which the resistance heater or conductive material can be applied.

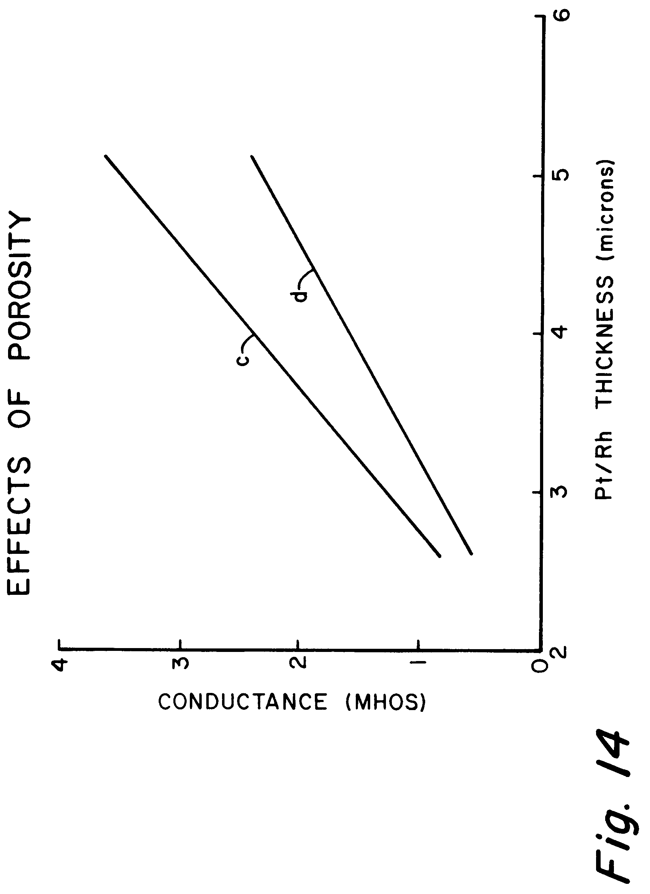

The amount of material needed to form a resistance heater of a given conductance depends on the method of deposition as well as the porosity of the substrate. The higher the porosity, the less uniform the coating will be and the more material will be required to form a heater having a given conductance. Generally, to form a uniform layer of conductive material over a porous substrate surface, a greater coating thickness is required. The required coating thickness for a given conductance will depend on the percentage of the open frontal area, the width of the current path or the width of the cell walls of the substrate, the resistivity of the conductive material, the porosity of the substrate and the method of deposition. While porosity, cell wall width and conductive layer thickness are important factors in controlling the conductance and heat exchange efficiency of heated substrates, it is believed that porosity is a more significant factor. FIG. 14 shows the effect of porosity on conductance as measured on a cordierite substrate having different thicknesses of a platinum/rhodium conductive layer. As indicated, higher conductances are measured on a thin wall substrate having about 22% porosity (line c), than on a standard wall substrate having about 35% porosity (line d).

If the substrate is too rough, or is, highly porous, substantially more conductive material will be required to form a uniform layer. The more porous the substrate, the thicker the layer of conductive material necessary to obtain a given conductance. However, if the conductive layer is too thick, spalling or flaking will occur, resulting in discontinuities on the conductive layer. Most honeycomb or cellular substrates for exhaust purification are typically formed with substrates having porosities greater than about 20%, with diesel particulate filter substrates having porosities often greater than about 50%. The surface smoothness and therefore, the conductance of the resistance heater formed on porous substrates can be improved by grinding and/or polishing, or by forming a smooth layer on the surface of the substrate prior to forming the layer of conductive material. We have found that, the conductance of the heater, when formed on a porous substrate can be improved by applying an intermediate layer of a suitable material having a thermal expansion matching the thermal expansion of the substrate to the surface of the substrate to reduce the roughness and/or porosity of the surface.

The adherence of the conductive layer to the substrate depends on various factors such as the composition and texture of the substrate, that is, the porosity or degree of smoothness of the substrate surface. If the substrate surface is too smooth the heater may not adhere to the substrate. On the other hand, if the surface is too rough or too porous the conductive layer will be non-uniform and uneven. If the surface is too smooth, adherence can be improved by methods such as etching or abrading the surface or by applying a layer of material such as chrome.

In one embodiment, FIG. 13 the conductance or resistance of the heated substrate is controlled by applying an intermediate layer 65, of a suitable material to the cell walls 20, to adjust the width of the ends of the cell walls, and then applying a layer of conductive material 70, over the intermediate layer 65. On a porous substrate, the smooth intermediate coating can serve the dual purpose of forming a smooth surface, as well as, providing a means for adjusting the thickness of the cell walls at the inlet end portion. One effect of the intermediate layer is to increase the effective surface area of the conductive material. Thus, by applying a smooth intermediate layer of a suitable material on the substrate, the current path and conductance of the conductive layer can be significantly improved. In addition, when the conductive layer is applied by sputtering, the intermediate layer can also form a shadow or shield over the cells thus, limiting the amount and depth of penetration of the conductive material into the cells.

Useful metal powders for the thick film ink include platinum, palladium, silver, rhodium, gold, copper or a combination of these metals. While noble metals are preferred, non-noble metals can also be used but such non-noble metals may require firing in a neutral or reducing atmosphere. In one particularly useful embodiment, the metal powder is a combination of silver (70%) and palladium (30%), designated 5030-2 (available from Degussa Metz Metallurgical Corporation of South Plainfield, New Jersey.) Silver flake and powder compositions such as those designated SF-10, SF-7E, SF-15ED, SF-15, SF-9 and SFK-NJ (also available from Degussa Metz Corporation) are also useful for the practice of this invention. (The different designations indicate the particle sizes and processing characteristics of the various composition, which information is not published by the manufacturer.) The amount of metal powder needed for the contact material is generally dictated by the density of the metal powder.

Useful organic vehicles or screening medium include solutions of ethyl cellulose, polyvinyl alcohol, methyl cellulose, fish oil, various pine oils and other polymers and oils. In one embodiment, the organic vehicle was prepared by dissolving 6 grams of ethyl cellulose EC-T-100 (from Hercules Inc.) in 100 grams of texanol ester alcohol (available from Eastman Kodak Corporation, NY).

The smooth intermediate coating can be any material having a thermal expansion similar to the thermal expansion of the substrate. For example, for ceramic substrates, pre-cordierite powder which has been sintered to a high density provides a useful material for the intermediate layer. Examples of other suitable materials for this purpose include glass-ceramic frit such as pre-cordierite frit or other suitable material. Any glass which can be converted to cordierite by sintering as well as other low expansion glass or glass-ceramics can be used for this purpose.

Any glass material which forms a low expansion glass-ceramic upon firing and which is compatible with the substrate and conductive material can be used for the practice of this invention. Examples of suitable materials for this purpose include any low expansion glass or glass-ceramic such as glass-ceramic frit, pre-cordierite frit or other suitable material. Useful glass compositions for this invention are described in U.S. Patent Nos. 4,714,687, 3,486,871, 4,015,048 and 3,681,097. Particularly useful glass frit compositions include glass-ceramics exhibiting very low coefficients of thermal expansion such as (1) low expansion zinc petalite-beta quartz glass-ceramics which have compositions in the ZnO-Al₂O₃-SiO₂ field, (2) sinterable powdered glasses comprising MgO, Al₂O₃, SiO₂ and at least one modifying oxide selected from the group consisting of BaO, PbO, SrO and CaO and which are thermally crystallizable at sintering temperatures to yield highly crystalline, low expansion, thermally stable glass-ceramics, and (3) lead titanate-containing crystallizable sealing glass consisting essentially in weight percent of from 60 to 80% of PbO, up to 20% of at least one divalent metal oxide selected from ZnO and BaO such that the total of divalent oxides and PbO is from 60 to 80%, 5 to 18% TiO₂, at least 1% B₂O₃ and at least 5% SiO₂, the total of B₂O₃ and SiO₂ being from 10 to 20%. When used as an intermediate layer as described elsewhere herein, the glass can then be sintered to form a uniform, less porous, surface over which the conductive material can then be applied as shown in FIG. 13.

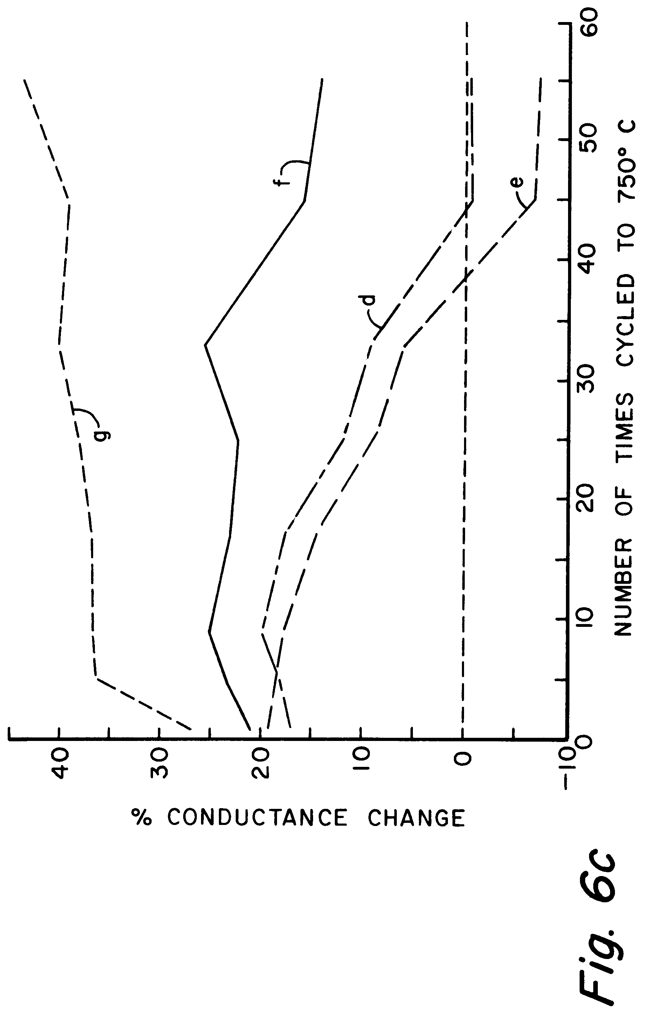

Thick film pastes or inks containing pure silver are not thermally stable as the silver tends to migrate thus reducing the adherence of the contact to the substrate surface. We have found that the thermal stability and adherence to the substrate can be improved by using a silver-palladium alloy. When the silver-palladium alloy is combined with lead titanate glass frit, the termination or contacts appear to be more stable under thermal cycling as shown in FIGS. 6c to 6d. This glass formulation has very low expansion as a result of lead titanate crystallization which occurs during firing. The primary role of titania in this particularly useful composition appears to be the development of a suitable low expansion crystal material (i.e., lead titanate), during thermal treatment. In addition, the lead titanate glass exhibits sufficient fluidity during firing to wet the substrate metal interface where flow is desirable. For applications where flow is not necessary, for example, for glazing applications, the most useful composition of lead titanate glass contains essentially 60 to 80% PbO, 12 to 18% TiO₂, 1 to 8% B₂O₃, and at least 5% SiO₂. When flow or fluidity of the paste is required, the glass composition is preferably 60 to 80% PbO, 0 to 20% BaO plus ZnO, 5 to 12 % TiO2, 10 to 20% B₂O₃ plus SiO₂ collectively, and at least 5% B₂O₃ and SiO₂ individually. We have found that the lead titanate frit, even though it contains lead, does not adversely react with the platinum.

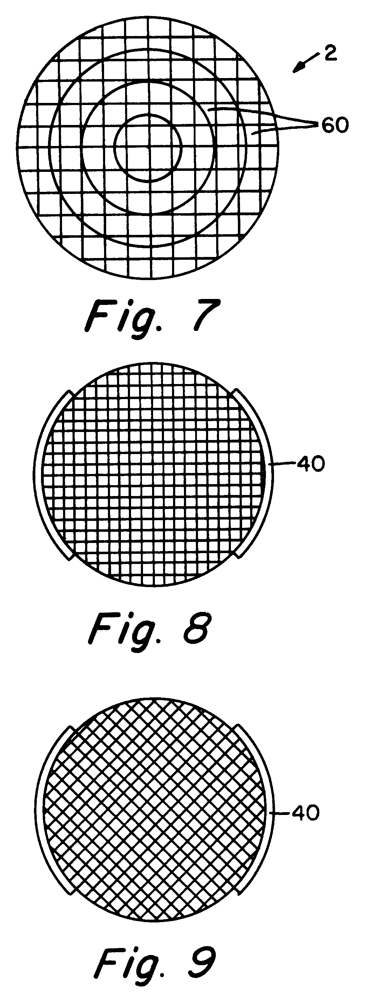

In one embodiment, the device is electromagnetically heated by placing the structure in an electromagnetic field. In this embodiment, the heater is formed by contacting a susceptor to the substrate. As shown in FIG. 7, the susceptor or conductive heating wires or ribbons 60 can be at least partially imbedded in the substrate 2. If desired, the layer of conductive material can also function as the susceptor. In this embodiment, the structure can be electromagnetically heated, for example, by microwave radiation or by other suitable electromagnetic heating methods.

For certain applications it may be desirable to deposit an electrically conductive coating on an electrically conductive substrate such as metal substrates formed with iron-chrome-aluminum alloys, or crimped and wrapped cellular bodies made from high temperature alloys such as alloys of nickel and chrome. In such applications, to avoid thermal shock which may result due to mismatch of thermal expansion, the conductive layer can be formed of the same material as the metal substrate. Generally, metals used for high temperature substrates develop a non-electrically conducting passivating oxide layer which allows these metals to withstand repeated use at very high temperatures. According to this embodiment, a non-conductive, passivating layer is formed on the surface of a metal substrate and then an electrically conductive layer is formed over the passivating, non-conductive layer to better control or regulate the conductance of the metal structure. In this embodiment, the conductive layer can be applied to all or part of the substrate in order to regulate or improve the conductance of the metal substrate. If only part of the metal substrate is coated with the conductive material, then it is also contemplated by this invention that only the coated portion would be heated although the metal substrate may also be heated.

In a particularly useful embodiment (FIG. 2), heating of the structure is accomplished by connecting the leads 6 to a power source and activating the structure by means of a switch to pass electric current to the heater 4. The electric power travels from one lead to another over a current path provided by the resistance heater 4. As shown in FIGS. 8 and 9, the current path can be varied by varying the arrangement and relative positions of the leads. The current path in a typical square-celled substrate can be parallel to the cell walls as shown in FIG. 8 or the contacts can be arranged diagonal to the cell walls (FIG. 9). In the diagonal arrangement, all off the cell walls are heated while in the parallel arrangement, the walls perpendicular to current flow are not heated so that only about half of the cell walls are heated. As a result, the heat transfer area is significantly less in the parallel than in the diagonal arrangement. In the parallel arrangement, several contacts or terminations can be provided so that different pairs of leads can be activated in sequence to provide for more uniform heating of the device.

Generally, reactors or converters are catalyzed with appropriate catalysts for the conversion of exhaust pollutants such as hydrocarbons, carbon monoxide, oxides of nitrogen and the like. In many instances, the catalysts are applied in a washcoat over a suitable substrate such as a honeycomb. As contemplated by this invention, the layer of conductive material can be applied to the substrate either before or after, preferably before, the catalytically active washcoat is applied to the substrate.

The following tests and examples further illustrate the invention but are not intended as limitations.

### Experiment 1. Voltage Requirement.

Heat-up times were determined by applying varying voltages to a 1-inch diameter standard wall cordierite honeycomb sample having porosity of about 20%, and which was coated with platinum to a thickness of 4.07 microns, and measuring the time required to char and burn Whatman #41 filter paper in ambient air. At an applied voltage of 7.5 volts, the paper burned/charred within 3.5 to 4.5 seconds. When the voltage was increased to 9.4 volts, the time required to char and burn the paper was reduced to 2.5 to 3.0 seconds.

### Experiment 2. Thermal Stability of Thick Film Contact Pastes.

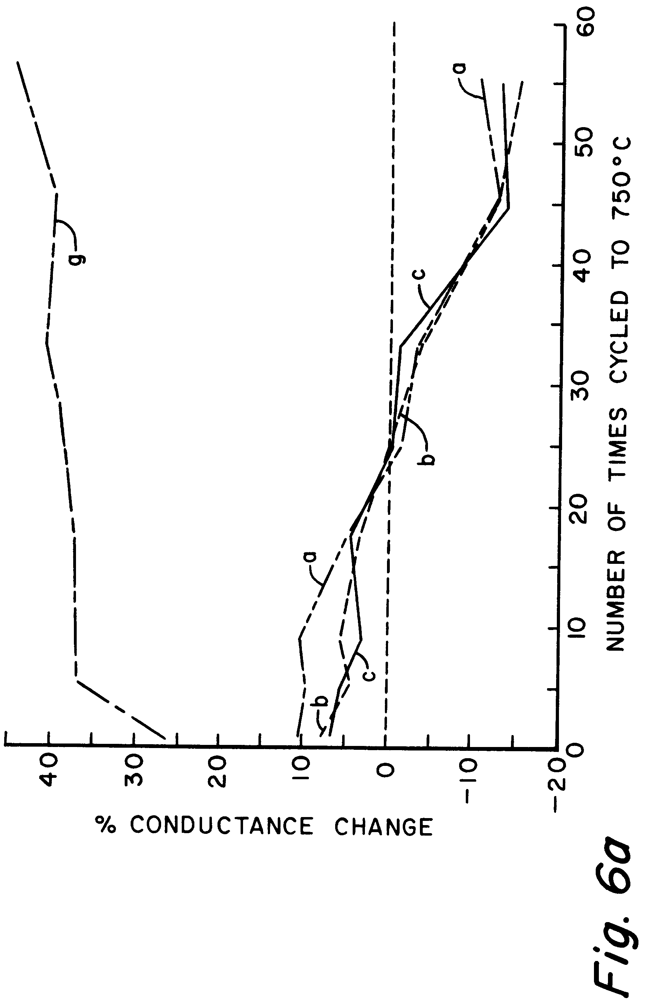

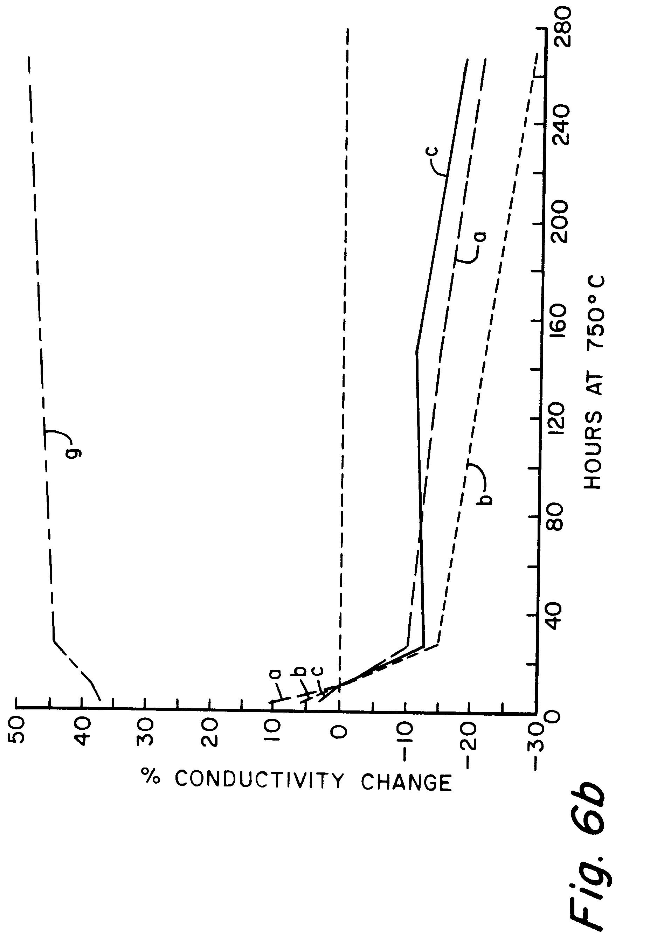

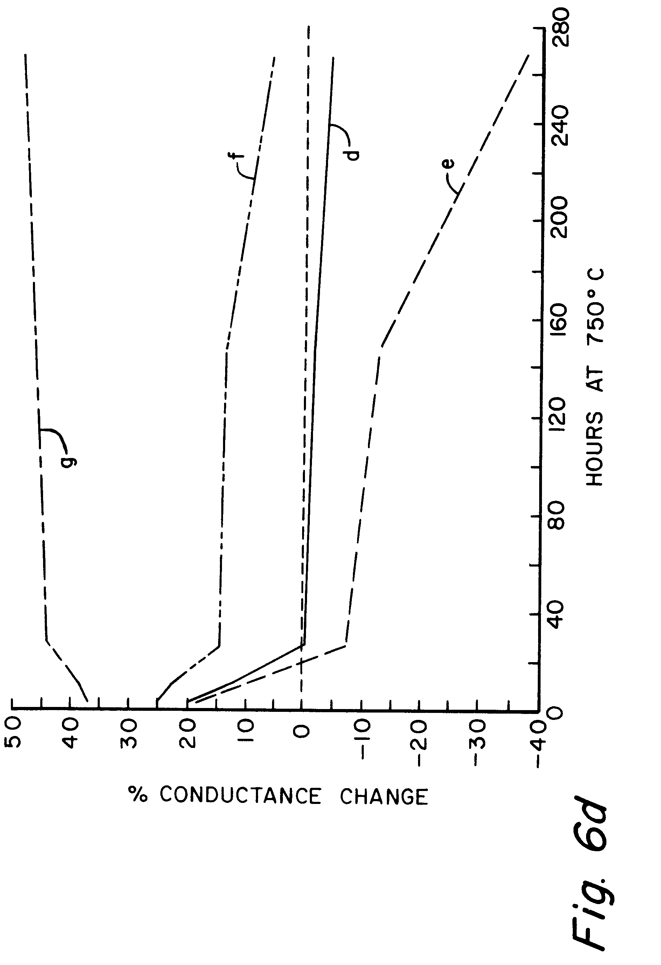

To determine the thermal stability of the thick film pastes or inks various samples of contact inks were subjected to thermal cycling to 750 °C and the change in conductance measured. A platinum sample with no contact ink was used as the control sample g, throughout the experiment. Three contact inks were prepared by mixing silver-palladium (70/30) alloy with three different frits. Sample a, containing zinc petalite-beta quartz glass-ceramic, sample b, containing sinterable powdered glass frit, and sample c containing lead titanate glass frit, were silk screened over the platinum conductive layer (FIGS. 6a and 6b), while the second set of samples, d-f containing the same three glass frits respectively, were screened under the platinum conductor (FIGS. 6c and 6d). In both sets of samples, after the first cycle to 750 °C, there was an increase in conductance, perhaps due to thermal consolidation of the platinum film. The same increase in conductance was observed in the platinum control sample.

As shown in FIG. 6b, the contact inks containing zinc petalite-beta quartz and sinterable glass frits (Samples a and b respectively) remained stable over 17 cycles after which the conductance rapidly declined. The loss in conductance after 55 cycles was about 10 and 15% respectively. Both samples showed slight cracking at the platinum/contact interface. The contact containing lead titanate frit (Sample c), remained stable after 9 cycles after which the conductance declined rapidly. After 55 cycles, the conductance had declined by about 13%. Unlike the first two samples, no cracking was observed at the platinum/contact interface of the lead titanate frit contact. All three samples were then soaked at 750 °C for 240 hours. The conductance of samples a and b continued to decline, while the conductance of sample c was observed to stabilize over the first 120 hours and then to decline slightly over the next 120 hours (FIG. 6b).

Samples d through f were silk screened under the platinum and cycled in the same manner as samples a-c. As shown in FIGS. 6c and 6d, samples d and e appeared stable over the first 17 cycles but declined rapidly thereafter. After 45 cycles, the samples again appeared to stabilize for the next 10 cycles. Sample e, containing the sinterable powdered glass frit showed some cracking at the platinum/contact interface after 45 cycles. Sample f containing lead titanate remained stable over the first 33 cycles. The conductance declined slightly over the next 8 cycles, but stabilized in the last ten cycles. Again, the samples were soaked at 750 °C for 240 hours. As shown in FIG. 6d, samples d and f remained fairly stable for the entire time, while sample e was stable for the first 129 hours but declined rapidly thereafter.

### Experiment 3.

A third set of contacts were prepared using silver flakes of varying particle sizes. All contacts were prepared using the lead titanate frit and silk screened under the platinum resistance heater. All of the silver contacts showed cracking and delamination of the platinum/contact interface after one cycle at 750 °C. The silver inks were poorly adhered to both the platinum and substrate surfaces and substantial amounts of silver had migrated into the platinum layer. Analysis also showed platinum to be present in the silver contact layer indicating inter-diffusion between the various layers.

### Experiment 4. Catalytic Converter Bench Test.

Samples were washcoated and catalyzed using the following standard (automobile catalytic converter) slurry composition:

| | |
|---|---|
| Boehmite dispersal | 68.5 g |
| Distilled water | 950.0 ml |
| 1:2 Nitric Acid | 39.0 ml |
| CeO₂ doped Al₂O₃ | 696.0 g |
| Molycorp 99% CeO₂ | 253.0 g |
| Surfynol Surfactant | 2.0 ml |

The slurry was milled to an average particle size of about 3.8 microns and the slurry pH was adjusted to the range of 3.6-3.8 using 1:1 HNO₃. The substrate was coated with platinum to a thickness of about 4.07 microns by sputtering and then washcoated with the slurry. The washcoated samples were then fired at 650 °C for 3 hours, loaded with 33.33 grams of platinum/ft3 and fired at 650 °C for 3 hours, and then loaded with 6.67 g rhodium/ft3 and again fired at 650 °C for 3 hours to complete the catalyst coating. The washcoated substrate was then preheated for 2 to 3 seconds just before contact with the waste gas. Pre-heating was achieved by applying about 9.4 volts, producing current in the range of about 13.8 to 14.2 amps. Lines a-c represent the conversion of hydrocarbons (HC), carbon monoxide (CO), and nitrous oxides (NOx) respectively, without preheating. Lines d-f represent the conversion of HC, CO, and NOx respectively, using a preheated sample. About 132 watts of electric power was used in running the experiment using simulated exhaust gas.

The pre-heated sample achieved 90% conversion of NOx and CO within 5 seconds of contact with the exhaust gas. The same level of conversion was achieved for hydrocarbons within about 7 seconds of contact. When the same sample was brought in contact with the waste gas without pre-heating, the time required to achieve 90% conversion of NOx and carbon monoxide was increased to about 20 seconds, while it required about 45 seconds to achieve the same level of conversion for the hydrocarbons.

### Experiment 5. Cell Wall Penetration

Tests were carried out to determine the uniformity and depth of penetration when metal such as platinum, is applied to a cordierite honeycomb substrate by sputtering. The test was first run using a thin wall honeycomb having cell openings of about 0.95 x 0.95 mm. In one case, the honeycomb substrate was coated by rotating it past a stationary sputtering gun. In the second case, both the sample and the gun were held stationary during the sputtering operation. Platinum penetration was about 7 mm in the stationary sample and in the range of 5.5-6 mm in the rotating sample.

The test was repeated using a standard wall honeycomb structure having cell openings of about 0.8 x 0.8 mm. Again, the stationary sample showed platinum penetration of about 7 mm while penetration in the rotating sample was in the range of 4.5-5 mm. In all samples, the platinum deposition was thickest at the top surfaces of the cell walls.

### Experiment 6. Conductance Test

This test was performed to determine the effective depth of penetration of the conductive coating. The result is reflected in FIG. 11. The test was run using a 1 inch diameter cordierite honeycomb substrate on which the inlet end portion had been coated with platinum, and on which platinum leads were attached in the manner shown in FIG. 12, by means of electrical contacts or terminations which are chemically compatible with the platinum. The result showed that about 86% of the conductance was within 4 mm of the coated surface, and substantially all of the conductance of the sample was within 8 mm of the coated surface. Beyond this level of penetration, the deposited platinum did not contribute significantly to the conductance. Therefore, only the conductive material formed closest to the surface of the substrate acts as a heater when voltage is applied.

### Experiment 7. Control of Heating Pattern.

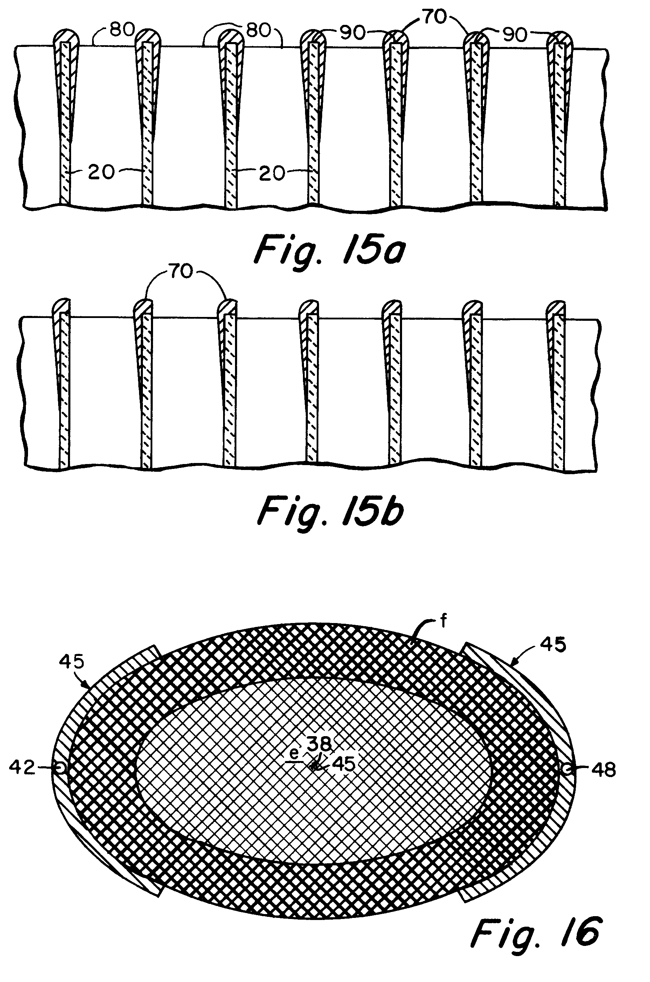

In this experiment, a layer of intermediate material such as cordierite glass was formed over the end surface of a cordierite cellular substrate and sintered to form a smooth cordierite surface. The center portion (e) of the end surface was then masked and a second layer of cordierite formed over the outer unmasked portion (f) of the end surface. The substrate was again fired to sinter the second layer of cordierite. As a result of this operation, the cell walls in the outer portion (f) of the substrate end surface were thicker than cell walls in the center portion (e). Copper leads or electrodes 42, 48 and 38 were attached to the outer surface of the outer portion (f) and to the center of the center portion (e) respectively, as shown in FIG. 16, by means of electrical contacts or terminations 45 which are chemically compatible with platinum. The substrate was then sputtered with platinum to form the resistance heater of the invention. The outer cell walls in region (f) received more conductive coating than the cell walls in region (e), and as a result, the measured conductance was higher in region (f) than in the center portion (e). When voltage was applied to the structure between the electrode in the center of region (e) and a contact in region (f), the center portion (e) having a higher resistance (lower conductance), heated up faster than the outer portion (f) having a lower resistance (higher conductance).

In addition to the embodiments discussed herein, it will be clear to persons skilled in the art that numerous modifications and changes can be made to the above embodiments without departing from the intended spirit and scope of the invention. For example, in one experiment, both the current path and conductance of a thin wall ceramic honeycomb substrate was significantly improved by coating the inlet end portion of the substrate with an intermediate layer of pre-cordierite which was sintered to form a smooth surface and then forming a layer of electrically conductive material over the smooth surface. The intermediate material can be a smooth sintered surface of any material which will form a low expansion glass, glass-ceramic, or ceramic upon firing. For metal substrates, the intermediate material may be a metal, glass, glass-ceramics, ceramics or any suitable material having similar thermal expansion properties. On metal substrates, the intermediate layer may be applied as an insulating layer or to increase the conductive path of the heater.

In another embodiment, the surface area can be increased by cutting a plurality of slots 80 on the end portion of the substrate to form ridges 90 of cell walls 20, and applying a layer of conductive material 70 on the cell walls 20 as shown in FIGS. 15a. In this embodiment, the conductance can be controlled by applying the conductive material to both sides of the cell walls a shown in FIG. 15a, or to one side as shown in FIG. 15b, depending on the required conductance. The heat exchange efficiency of the heated substrate can be further improved by applying an intermediate layer of a suitable material on the cell walls as shown in FIG. 13, and then applying a layer of conductive material over the intermediate layer.

It is also contemplated by the present invention to improve the heat exchange efficiency of a heated substrate by impregnating a portion of a non-conductive substrate with an electrically conductive material such as chloroplatinic acid, firing the substrate to convert the chloroplatinic acid to platinum, and optionally, applying a layer of conductive material over the platinum.

The conductance can also be controlled by varying the current path and heating pattern of the coated substrate. This can be accomplished for example, by selectively varying the thickness, width, and smoothness of the intermediate material on different portions of the substrate as shown in FIG. 16, and as described in Experiment 7 below. By thus varying the conductance and resistance on different portions of the coated surface, the heating pattern can be controlled. Using this technique, heat can be directed away from portions of the heated structure to minimize the effect of differences in coefficient of thermal expansion between the materials used to form the contact and the substrate. In this embodiment, a lead wire attached or contacted to the substrate in region (e) is connected to contacts positioned in the periphery of region (f).

## Claims

1. A resistive heating device comprising:
a cellular substrate having inlet and outlet end faces, and a matrix of cell walls defining a plurality of cells or passageways extending longitudinally and mutually parallel therethrough between the inlet and outlet end faces;
a layer of electrically conductive material formed on the cell walls on the inlet end portion of the substrate such that the layer of conductive material is an integral part of the substrate; and
means for activating the device.

2. The device of claim 1, wherein the means for activating the device comprises (a) an electrical lead connected to the layer of conductive material, the lead being selected from the group consisting of platinum, copper, silver, palladium, rhodium and their alloys, and (b) means for connecting the lead to a power source.

3. The device of claim 2, wherein the leads are contacted to the layer of conductive material by means of a sintered electrically conductive paste.

4. The device of claim 3, wherein the layer of conductive material is formed over the electrically conductive paste which comprises:
(a) low expansion glass frit selected from the group consisting of
(1) low expansion zinc petalite-beta quartz glass-ceramics which have compositions in the ZnO-Al₂O₃-SiO₂ field,
(2) sinterable powdered glasses comprising MgO, Al₂O₃, SiO₂ and at least one modifying oxide selected from the group consisting of BaO, PbO, SrO and CaO and which are thermally crystallizable at sintering temperatures to yield highly crystalline, low expansion, thermally stable glass-ceramics, and
(3) lead titanate-containing crystallizable sealing glass consisting essentially in weight percent of from 60 to 80% of PbO, up to 20% of at least one divalent metal oxide selected from ZnO and BaO such that the total of divalent oxides and PbO is from 60 to 80%, 5 to 18% TiO₂, at least 1% B₂O₃ and at least 5% SiO₂, the total of B₂O₃ and SiO₂ being from 10 to 20%; and
(b) metal powders selected from the group consisting of platinum, silver, palladium, rhodium and copper.

5. The device of claims 1, 2, 3 or 4, wherein the substrate is a substantially electrically insulating honeycomb structure.

6. The device of claim 1, wherein the power source is capable of generating electric or electromagnetic energy.

7. The device of claim 1, wherein the cellular substrate is a substantially electrically conductive structure, and the device further comprises a layer of non-conductive passivating layer formed between the substrate and the layer of electrically conductive material.

8. The device of claim 2, wherein all cells are open at both end faces of the substrate and the combined thickness of the cell walls and the layer of conductive material is such that the open frontal area of the substrate is greater than 50%, the cell wall thickness is in the range of 0.11 to 0.20 mm, and the thickness of the conductive layer is in the range of 0.05 - 4.5 microns.

9. The device of any preceding claim, wherein the substrate further comprises catalytically active washcoat.

10. The device of any preceding claim, further comprising a layer of intermediate material disposed between the substrate and the conductive material.

11. The device of claim 10, wherein the intermediate material is a low expansion glass selected from the group comprising low expansion zinc petalite-beta quartz glass-ceramic having a composition in the ZnO-Al₂O₃-SiO₂ field; sinterable powdered glass comprising, apart from incidental impurities, MgO, Al₂O₃, SiO₂ and at least one modifying oxide selected from the group consisting of BaO, PbO, SrO and CaO and which is thermally crystallizable at sintering temperatures to yield a highly crystalline, low expansion, thermally stable glass-ceramic; and lead titanate-containing crystallizable sealing glass consisting essentially, apart from incidental impurities, in weight percent of 60 to 80% of PbO, up to 20% of at least one divalent metal oxide selected from ZnO and BaO such that the total of divalent oxides and PbO is 60 to 80%, 5 to 18% TiO₂, at least 1% B₂O₃ and at least 5% SiO₂, the total of B₂O₃ and SiO₂ being 10 to 20%.

12. A method for making a resistive heating device comprising the steps of (a) providing a cellular substrate having inlet and outlet end faces, and a matrix of walls defining a plurality of cells or passageways extending longitudinally and mutually parallel therethrough between the inlet and outlet end faces, (b) forming a layer of conductive material on the inlet end portion of the substrate, and (c) contacting an electrical lead wire to the layer of conductive material, and providing means for connecting the lead wire to an electric power source.

13. The method of claim 12, wherein all cells are open at both end faces of the substrate, and the layer of electrically conductive material is applied such that together, the cell walls and the layer of conductive material occupy an area comprising less than 40% of the plane of the inlet end face of the substrate.

14. A method for controlling the conductance of a heated cellular structure comprising the steps of providing a cellular substrate having inlet and outlet end portions, and a matrix of cell walls defining a plurality of cells or passageways extending longitudinally and mutually parallel therethrough between the inlet and outlet end portions, shielding a portion of the substrate, and applying a layer of conductive material over the unshielded portion of the substrate.

15. The method of claim 11, wherein said portion of the substrate is shielded by:
(a) applying photoresist material on the substrate; applying masking material on the inlet end portion; exposing the structure to light radiation; and dissolving the photoresist material from the unexposed inlet end portion;
(b) dipping a portion of the substrate into a masking material to form a protective layer over part of the substrate; or
(c) plugging the cells in a portion of the substrate to a predetermined depth.

16. The method of claim 15, further comprising the step of forming an intermediate layer of suitable material on the substrate prior to the shielding step, the suitable material being selected from the group consisting of glass frit, ceramic frit, and cordierite.

17. The method of claim 16, wherein the intermediate material is a low expansion glass selected from the group consisting of low expansion zinc petalite-beta quartz glass-ceramic having a composition in the ZnO-Al₂O₃-SiO₂ field; sinterable powdered glass comprising, apart from incidental impurities, MgO, Al₂O₃, SiO₂ and at least one modifying oxide selected from the group consisting of BaO, PbO, SrO and CaO and which is thermally crystallizable at sintering temperatures to yield a highly crystalline, low expansion, thermally stable glass-ceramic; and lead titanate-containing crystallizable sealing glass consisting essentially, apart from incidental impurities, in weight percent of 60 to 80% of PbO, up to 20% of at least one divalent metal oxide selected from ZnO and BaO such that the total of divalent oxides and PbO is 60 to 80%, 5 to 18% TiO₂, at least 1% B₂O₃ and at least 5% SiO₂, the total of B₂O₃ and SiO₂ being 10 to 20%.

18. The method of claim 11, wherein the substrate is a honeycomb structure.

19. An exhaust gas apparatus comprising an exhaust gas conduit having disposed therein a device comprising:
a cellular substrate having inlet and outlet end faces, and a matrix of cell walls defining a plurality of cells or passageways extending longitudinally and mutually parallel therethrough between the inlet and outlet end faces;
a layer of electrically conductive material formed on the cell walls on the inlet end portion of the substrate such that the layer of conductive material is an integral part of the substrate; and
means for activating the device.

20. The apparatus of claim 16, wherein the device further comprises catalytically active washcoat formed over the substrate and the layer of electrically conductive material.

21. The apparatus of claim 17, wherein there is further disposed within the conduit, a catalytic converter located downstream from the device.
